# EUROPÄISCHE PATENTANMELDUNG

(11) **EP 1 699 005 A1**
(43) Veröffentlichungstag der Anmeldung: **06.09.2006**
(21) Anmeldenummer: 05004453.6
(22) Anmeldetag: 01.03.2005
(51) Int. Cl.: G06Q 10/00

(54) **Integration von MES- und Controls-Engineering**

(71) Anmelder: SIEMENS AKTIENGESELLSCHAFT, 80333 München (DE)
(72) Erfinder: Bamberger, Stefan, Dr., 16146 Genua (IT); Bortoloso, Luca, 16151 Genova (IT); Gaissmaier, Bernhard, 91080 Uttenreuth (DE); Kerndlmaier, Michael, Dr., 91301 Forchheim (DE); Leins, Ralf, 75228 Ispringen (DE); Minigutti, Mario, 16143 Genova (IT); Nitzsche, Stefan, 67227 Frankenthal (DE); Pazzini, Maurizio, 16035 Rapallo (GE) (IT); Reuter, Thomas, 76149 Karlsruhe (DE)

(57) **Zusammenfassung**

Die Erfindung betrifft ein System und ein Verfahren zur integrierten Entwicklung von Projekten unterschiedlicher Ebenen, insbesondere von Automatisierungsprojekten im MES- und Controls-Bereich. Durch Verwendung einheitlicher Modelle wird die integrierte Entwicklung erleichtert. Hierbei wird in einer ersten Projektierumgebung (1) eine erste Projektierungslösung erstellt, insbesondere eine Automatisierungslösung auf der Steuerungs-Ebene, in mindestens einer zweiten Projektierumgebung (2) wird mindestens eine zweite Projektierungslösung erstellt, insbesondere eine Lösung zur Koordination von Prozessen und/oder Abläufen der ersten Projektierungslösung, wobei für die Erstellung der Projektierungslösungen ein gemeinsames Daten- und/oder Objektmodell von den Projektierumgebungen verwendet wird und in einer der beiden Projektierungslösungen verwendeten Daten und/oder Objekte für eine Verwendung in jeweils der anderen Projektierungslösung gekennzeichnet werden.

## Beschreibung

Die Erfindung betrifft ein System und ein Verfahren zur integrierten Entwicklung von Projekten.

Während Control-Systeme im Rahmen der Automatisierungstechnik die Fähigkeit sicherstellen, Betriebsmittel so zu verwalten, dass die gewünschten physikalischen Prozesse realisiert werden können, bieten Manufacturing Execution Systems (MES) die Möglichkeit, die auf der Steuerungsebene ausgeführten Tätigkeiten mit dem Ziel zu organisieren, die Anforderungen der Produktion im Hinblick auf Menge, Qualität und termingemäße Bereitstellung der hergestellten Produkte und/oder umgewandelten Werkstoffe zu erfüllen.

Produktionsanforderungen werden heutzutage im Allgemeinen auf Basis einer Produktionsplanung generiert, die durch tatsächliche oder geschätzte Bestellungen bestimmt wird; diese Tätigkeit wird normalerweise von ERP- und SCM-Systemen verwaltet. Die Funktion von MES besteht darin, dass sie die in Unternehmenssystemen ausgearbeitete Produktionsplanung akzeptieren und die Fähigkeit zur Verfügung stellen, diese Planung in die erforderliche tatsächliche Folge von Produktionsschritten umzuwandeln, welche von den Produktionssystemen verstanden und ausgeführt werden können.

Erfolgreiche und optimierte Produktionssysteme hängen sowohl von der Koordination der Produktionstätigkeiten als auch von der genauen Steuerung der physikalischen Prozesse ab; daher ist die Integration zwischen dem MES- und dem Control-Bereich aus Sicht der Benutzer ein entscheidender Faktor.

Kombinierte MES- und Control-Systeme sind insbesondere für Systemintegratoren (Lieferanten von Lösungen für die Endbenutzer) und Systemeigentümer (Kunden/Benutzer des Produktionssystems) interessant.

Die von der Instrumentation Society of America (ISA) entwickelten Standards (S95, S88) haben dazu beigetragen, eine allgemein akzeptierte Betrachtungsweise der Organisation von Control- und MES-Systemen einzuführen.

Da ein großer Teil des Engineering-Aufwands bei der Entwicklung sowohl von MES- als auch von Control-Systemen in der Modellierung der verfügbaren Betriebsmittel besteht (welche Maschinen, mit welchen charakteristischen Merkmalen, mit welchem Funktionsumfang usw.) und der verfügbare Maschinenpark für die Produktion für beide Systemtypen derselbe ist, stehen die Qualität und der Integrationsgrad des MES- und des Control-Bereiches in einem unmittelbaren Zusammenhang mit der Fähigkeit, Betriebsmittel-Ressourcen und die dazugehörigen Funktionalität in einer Engineering-Umgebung zu modellieren und anschließend die gemeinsamen Informationen in dem anderen Bereich verfügbar und verwendbar zu machen.

Aus der unveröffentlichten Anmeldung mit dem Aktenzeichen EP 04030322.4 sind ein System und ein Verfahren zum Austausch von anwendungsorientierten Beschreibungsdaten zwischen Projekten, insbesondere zwischen Engineering-Projekten im Automatisierungsumfeld bekannt. Es wird eine effiziente und sichere Möglichkeit zum Austausch von Beschreibungsdaten, insbesondere von anwendungsorientieren Engineeringdaten zwischen Teilprojekten gegeben. Eine Speicherung und ein anschließender Austausch relevanter Beschreibungsdaten von Objekten all derjenigen Informationen, welche für die Kommunikation zwischen Teilprojekten benötigt werden, werden mittels des Systems und des Verfahrens sichergestellt. Die gemeinsame Speicherung der Beschreibungsdaten erfolgt in sogenannten Inter-Project-Interfaces.

Aus der unveröffentlichten Anmeldung mit dem Aktenzeichen EP 04030319.0 sind ein System und ein Verfahren zum Verwalten und/oder Bereitstellen von aus Elementen bestehenden Teillösungen bekannt. Mit Hilfe des Systems und Verfahrens können bestehende Teillösungen wieder verwendet und aktualisiert werden. Hierbei wird mindestens eine Teillösung insbesondere durch einen Benutzer kreiert, wobei die mindestens eine Teillösung als Vorlage zur Erstellung einer Kopie dient. Die kreierte Teillösung wird in einer Bibliothek gespeichert und eine Kopie einer gespeicherten Teillösung wird erstellt. Dabei dient die mindestens eine Kopie der Teillösung zur Verwendung für die Erstellung einer Lösung, insbesondere einer Automatisierungslösung.

Aufgabe der vorliegen Erfindung ist es daher, ein System und ein Verfahren anzugeben, mittels dessen eine integrierte Entwicklung von Projekten unterschiedlicher Ebenen, insbesondere von Automatisierungsprojekten im MES- und Controls-Bereich durch Verwendung einheitlicher Modelle erleichtert wird.

Die Aufgabe wird gelöst durch ein System zur integrierten Entwicklung von Projekten, insbesondere von automatisierungstechnischen Projekten, mit mindestens einer ersten Projektierumgebung zur Erstellung einer ersten Projektierungslösung, insbesondere einer Automatisierungslösung auf der Steuerungs-Ebene, mindestens einer zweiten Projektierumgebung zur Erstellung einer zweiten Projektierungslösung, insbesondere einer Lösung zur Koordination von Prozessen und/oder Abläufen der ersten Projektierungslösung, einem gemeinsamen Daten- und/oder Objektmodell für die Projektierumgebungen und Mitteln zur Kennzeichnung von in einer der beiden Projektierungslösungen verwendeten Daten und/oder Objekten zur Verwendung in mindestens der jeweils anderen Projektierungslösung.

Die Aufgabe wird weiterhin gelöst durch ein Verfahren zur integrierten Entwicklung von Projekten, insbesondere von automatisierungstechnischen Projekten, bei dem in einer ersten Projektierumgebung eine erste Projektierungslösung erstellt wird, insbesondere eine Automatisierungslösung auf der Steuerungs-Ebene, in mindestens einer zweiten Projektierumgebung mindestens eine zweite Projektierungslösung erstellt wird, insbesondere eine Lösung zur Koordination von Prozessen und/oder Abläufen der ersten Projektierungslösung, für die Erstellung der Projektierungslösungen ein gemeinsames Daten- und/oder Objektmodell von den Projektierumgebungen verwendet wird und in einer der beiden Projektierungslösungen verwendeten Daten und/oder Objekte für eine Verwendung in jeweils der anderen Projektierungslösung gekennzeichnet werden.

Die Fähigkeit, Informationen zwischen MES- und Control-System auszutauschen, ist eine grundlegende Anforderung; die eigentliche Herausforderung besteht jedoch darin sicherzustellen, dass sich die Kenntnisse über die verfügbaren (physikalischen und funktionellen) Prozessressourcen, welche MES- und Control-System handhaben müssen, zur Realisierung der Produktion gemeinsam nutzen lassen. Die gemeinsame Nutzung dieser Informationen bietet große Vorteile, was das Engineering und die Instandhaltung der kombinierten Systeme anbelangt.

Die gemeinsamen Informationen hängen mit den sich überlappenden Schichten der Standards S95 und S88 zusammen, nämlich "Prozesszelle" und "Einheit".

MES- und Control-Produkte sollen dazu dienen, Systemintegratoren eine möglichst attraktive Entwicklungsumgebung und entsprechende Tools zur Verfügung zu stellen, so dass sie den Endbenutzern mit möglichst niedrigem Aufwand die modernsten Systeme liefern können. Dieses Merkmal sowie die Offenheit, die weite Verbreitung und das umfangreiche Spektrum, das von Siemens-Produkten abgedeckt wird, sind auch für Endbenutzer ein grundlegender Vorteil. Die Aufgabe der Modellierung und des Engineerings von Control-System und MES wird normalerweise von Systemintegratoren gelöst.

In der Prozessindustrie entsprechen die entwickelten SW Control-Objekte normalerweise den technologischen Objekten, die in der Anlage zu steuern sind: Dies ist der Fall, wenn eine Technologische Hierarchie verfügbar ist und verwendet wird.

Ist dies nicht der Fall, wird also keine Technologische Hierarchie verwendet, z.B. in der Fertigungsindustrie, dann ist nur eine Komponentendarstellung verfügbar, und die SW-Objekte entsprechen Funktionen in einem Programm, das in einer programmierbaren Verknüpfungssteuerung (PLC) läuft.

Die Modellierung/das Engineering des MES wird entsprechend einer technologischen Darstellung der Betriebsmittel durchgeführt. Die Modellierung/das Engineering des Control-Systems kann vor dem MES durchgeführt werden, oder (z. B. im Falle von neuen Systemen oder bei Modernisierung vorhandener Einrichtungen) das MES-Modell der Betriebsmittel kommt zuerst, da es zuerst generiert wird, um High-Level-Funktionen zu analysieren. Der Fall "MES zuerst" ist zum Beispiel auf einen Systemintegrator anwendbar, der in der Lage ist, eine vorkonfigurierte Funktionalität für einen spezifischen Industriezweig anzubieten, welche sowohl den MES- als auch den Control-Bereich einschließt, und der an den Kunden herangeht, indem er zunächst damit beginnt, die Produktionsorganisation zu definieren.

Im Allgemeinen kann die Modellierung/das Engineering der beiden Bereiche von demselben Systemintegrator oder auch von verschiedenen Systemintebgratoren durchgeführt werden.

Ausgehend von den oben genannten Möglichkeiten, können die folgenden Anwendungsfälle vorliegen:

Das Control-System wird zuerst entwickelt (bottom up). Die Modellierung des Control-Systems ist technologisch. Die Modellierung des Control-Systems ist nicht technologisch.

Das MES wird zuerst modelliert (top down). Die Modellierung des Control-Systems ist technologisch. Die Modellierung des Control-Systems ist nicht technologisch.

Im Folgenden wir die Erfindung anhand der in den Figuren dargestellten Ausführungsbeispiele näher beschrieben und erläutert.

Es zeigen:
- Fig 1: Eine schematische Darstellung des Systems am Beispiel eines "bottom up" Engineerings eines Projektes mit technologischer Hierarchie
- Fig 2: Eine schematische Darstellung des Systems am Beispiel eines "bottom up" Engineerings eines Projektes ohne technologische Hierarchie
- Fig 3: Eine schematische Darstellung eines "top down" Engineerings
- Fig 4: Eine schematische Darstellung des Engineerings der Basisarchitaktur
- Fig 5: Einen Domänen orientierter Ansatz
- Fig 6: Ein Lösungs-Bibliothekskonzept
- Fig 7: Ein Lösungs-Bibliothekskonzept

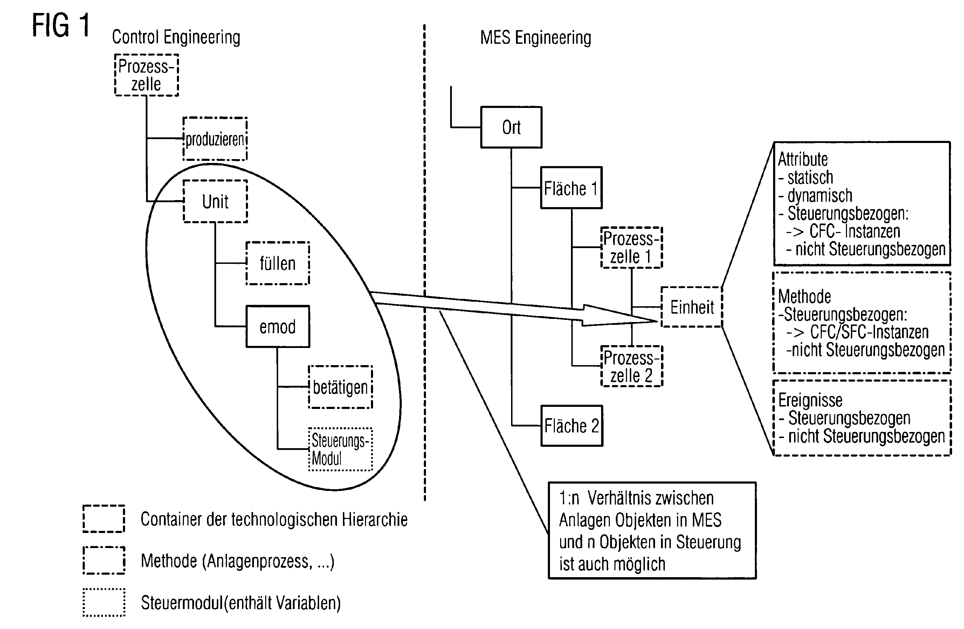

Fig 1 zeigt eine beispielhaft Ausführung des erfindungsgemäßen Systems, bei dem in einer ersten Projektierumgebung 1 das Controls-Engineering und in einer zweiten Projektierumgebung 2 das MES Engineering durchgeführt werden. Das Betriebsmittelmodell wird in einer technologischen Hierarchie geschaffen, und daher existiert zu den erzeugten SW-Objekten ein Gegenstück im realen technologischen Maschinenpark in der Betriebsanlage.

Der Bezugsstandard in der Prozessindustrie für diese Art von Modellierung ist die hierarchische Betriebsmittelstruktur nach S88. Obwohl es wünschenswert ist, kann nicht davon ausgegangen werden, dass das Modell des Control-Systems vollständig dem später zu entwickelnden MES-Modell entspricht.

Nachdem das Control-System entwickelt und installiert sowie in Betrieb genommen worden ist, wird eine MES-Lösung entwickelt, um die Prozesssteuerungstätigkeiten mit der Produktionsplanung aus den Unternehmenssystemen zu koordinieren. Der Benutzer muss wählen, welche Objekte, die zu den Hierarchieebenen gehören, welche S88 und S955 gemeinsam sind (Einheit und Prozesszelle), von Control und MES gemeinsam genutzt werden sollten. Diese Objekte stellen dann die Steuerungselemente und -funktionalität dar, welche vom MES angesteuert werden, um die geplante Produktion durchzuführen. Diese Analyse von Steuerungsprozessen kann wie folgt durchgeführt werden:
Auf der Seite des Control-Systems wählt der Benutzer folgendes aus:
   - eine Prozesszelle;
   - die Automatisierungseinheiten, an denen er interessiert ist, innerhalb dieser Zelle;
   - die Attribute der einzelnen Einheiten, an denen er interessiert ist (FB's, CFC's, SFC's);
   - die Ereignisse (Events) der einzelnen Einheiten, an denen er interessiert ist;
   - die Methoden (Funktionen) der einzelnen Einheiten, an denen er interessiert ist (FB's, CFC's, SFC's) und die relevanten Parameter.

Die Attribute, Ereignisse, Methoden einer Einheit können in hierarchischen Containern enthalten sein, die sich auf Ebenen unter der Einheit selbst befinden (d. h. Betriebsmittelmodul oder Steuerungsmodul); trotzdem sieht dann das MES diese Fähigkeiten als zu der Einheit gehörig an (wobei es den Raum unter der Einheit im MES-Anlagenmodell glättet).

Falls Control-Objekte unmittelbar unter der gewählten Prozesszelle angeordnet sind und Attribute, Ereignisse, Methoden repräsentieren, die für das MES relevant sind, können sie gewählt werden und erscheinen dann im MES-Modell als Attribute, Ereignisse, Methoden des MES Zellen-Objekts.

Auf der Seite des MES wählt der Benutzer folgende aus:

In der Engineering-Umgebung des MES wird automatisch ein MES Prozesszellen-Objekt abgeleitet, das die Einheiten enthält, die in der Engineering-Umgebung des Control-Systems gewählt wurden. Der Benutzer muss die neue Zelle in dem entsprechenden Bereich anordnen (dieser Bereich kann bereits zuvor existieren oder zu diesem Zeitpunkt erzeugt werden). Das Engineering der MES-Objekte muss durchgeführt werden, im Sinne:
- des Definierens der MES-Methoden, welche dann die Funktionalität "Methode" aktivieren, die durch die FB's, CFC's, SFC's repräsentiert wird;
- des Definierens, wie die MES-Ereignisse durch die Control-Ereignisse ausgelöst werden sollen;
- des Benennens der Objekte entsprechend der MES Projekt-Übereinkunft (nur wenn erforderlich).

Die MES-Objekte werden dann mit der gesamten erforderlichen MES-Funktionalität ausgestattet.

Neben der beschriebenen gemeinsamen Nutzung von Prozesszellen kann das erfindungsgemäße System und Verfahren auch für die gemeinsame Nutzung von Einheiten angewendet werden. In diesem Falle ist nur ein Teil der in einer Zelle definierten Einheiten für das MES von Interesse, oder das Anlagenmodell des MES gruppiert die Einheiten auf andere Weise, als dies beim Control-System der Fall war.

Auf der Seite des Control-Systems wählt der Benutzer folgendes aus:
- die Einheiten, an denen er interessiert ist, innerhalb einer Zelle (oder mehrerer);
- die Attribute, Ereignisse, Methoden und Parameter, die für die Einheiten relevant sind, an denen er interessiert ist (FB's, CFC's, SFC's), wie zuvor beschrieben.

Auf der Seite des MES führt der Benutzer folgendes durch:

In der Engineering-Umgebung des MES wird eine Anzahl von MES-Einheit-Objekten abgeleitet, welche den Objekten entsprechen, die in der Engineering-Umgebung des Control-Systems gewählt wurden. Der Benutzer muss die neuen Einheiten in dem entsprechenden Hierarchie-Knoten anordnen (dieser Knoten kann bereits zuvor existieren oder zu diesem Zeitpunkt erzeugt werden). Das Engineering der MES-Objekte ist wie im vorhergehenden Abschnitt beschrieben durchzuführen.

Um eventuelle Unterscheide in der Control- und MES-Modellierung auszugleichen, wird dem Benutzer die Möglichkeit gegeben, mehrere Control-entwickelte Objekte zu einem einzigen MES-Objekt "zusammenzufügen" oder ein Control-Objekt mit mehr als einem MES-Objekt zu verknüpfen. Im Falle einer extremen Nichtübereinstimmung zwischen den beiden Modellen ist dann der zweite Anwendungsfall ("von unten nach oben" ohne technologische Hierarchie) anwendbar.

Der Benutzer wird in der Lage sein, mit den Objekten zu operieren, die von dem Control-System auf Instanz-Ebene abgeleitet wurden: Am Ende des Ableitungsprozesses enthält die MES-Bibliothek nicht die Klassen, die diesen Objekten entsprechen. In einem zusätzlichen Entwicklungsschritt ist der Entwickler dann in der Lage, den Prozess der Umwandlung der importierten Instanzen in Klassen zu steuern und festzulegen, wie sie für eine erneute Verwendung in einer Bibliothek gespeichert werden.

Falls die in MES definierte Betriebsmittel-Hierarchie nicht S95 ist, sind die folgenden Fälle möglich:
Die Hierarchien sind nicht kompatibel, und dann muss die Herangehensweise "ohne technologische Hierarchie" angewendet werden. Das bedeutet, dass in diesem Falle die Abbildung zwischen den Hierarchien manuell konstruiert werden muss.

Die Hierarchien sind kompatibel, und die MES-Hierarchie umfasst Ebenen unter der Einheit (z. B. es werden auch Betriebsmittelmodule und Steuerungsmodule modelliert). In diesem Falle ist es dann möglich, die zusätzlichen Objekte der Betriebsmittel aus der Hierarchie des Control-Systems heraus abzuleiten, ohne dass es notwendig ist, den Raum unterhalb der Einheit zu glätten.

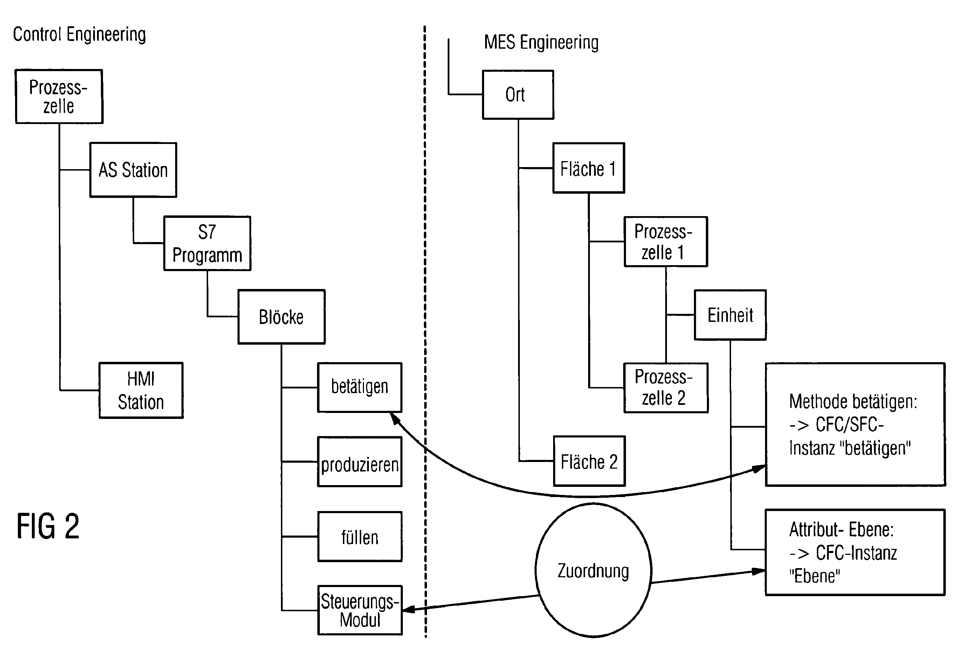

Fig 2 zeigt ein Ausführungsbeispiel ohne technologische Hierarchie. Das Steuerungsprogramm wird in einer Komponentendarstellung erzeugt, daher entsprechen die erzeugten SW-Objekte einem gewissen Funktionsumfang innerhalb einer programmierbaren Verknüpfungssteuerung. In diesem Falle sind die verfügbaren Informationen, die aus dem Control-System zu extrahieren sind, für Attribute, Ereignisse und Methoden von Bedeutung, doch sie können nicht automatisch mit irgendwelchen technologischen oder MES-Objekten in Verbindung gebracht werden.

Nachdem das Control-System entwickelt und (normalerweise) installiert sowie in Betrieb genommen worden ist, wird eine MES-Lösung entwickelt, um die Prozesssteuerungstätigkeiten mit der Produktionsplanung aus den Unternehmenssystemen zu koordinieren.

Der Benutzer muss wählen, welche Attribute, Ereignisse, Methoden von Control und MES gemeinsam genutzt werden sollten. Da im Control-System keine technologischen Informationen zur Verfügung stehen, ist für jedes Hierarchie-Objekt, welches der Benutzer mit Control-basierter Funktionalität anreichern möchte, der folgende Prozess durchzuführen. Das MES-Objekt muss vor dem Prozess der Auswahl und gemeinsamen Nutzung existieren.

Auf der Seite des Control-Systems wählt der Benutzer für jedes MES-Zielobjekt
- die Attribute der einzelnen Einheiten, an denen er interessiert ist (FB's, CFC's, SFC's);
- die Ereignisse (Events) der einzelnen Einheiten, an denen er interessiert ist;
- die Methoden (Funktionen) der einzelnen Einheiten, an denen er interessiert ist (FB's, CFC's, SFC's) und die relevanten Parameter.

Auf der Seite des MES wird folgendes durchgeführt:
Die gewählten Control-basierten Fähigkeiten werden mit einem Objekt der MES-Hierarchie verknüpft.
Das Engineering der MES-Objekte muss durchgeführt werden, im Sinne:
- des Definierens der MES-Methoden, welche dann die Funktionalität "Methode" aktivieren, die durch die FB's, CFC's, SFC's repräsentiert wird;
- des Definierens, wie die MES-Ereignisse durch die Control-Ereignisse ausgelöst werden sollen;
- des Benennens der Objekte entsprechend der MES Projekt-Übereinkunft (nur wenn erforderlich);
- MES-Objekte existieren bereits zuvor und brauchen möglicherweise nicht zusätzlich um weitere MES-Funktionalität erweitert zu werden.

Dieser Anwendungsfall ist hauptsächlich für die diskrete Industrie zutreffend, wo meist PLC-basierte Lösungen zum Einsatz kommen.

Die Erweiterung um die Control-basierte Funktionalität wird auf der Instanz-Ebene durchgeführt. Daher enthält die MES-Bibliothek am Ende des Ableitungsprozesses nicht die Klassen, welche diesen Objekten entsprechen. Dies geschieht in einem zusätzlichen Entwicklungsschritt, wie im vorhergehenden Abschnitt erläutert wurde.

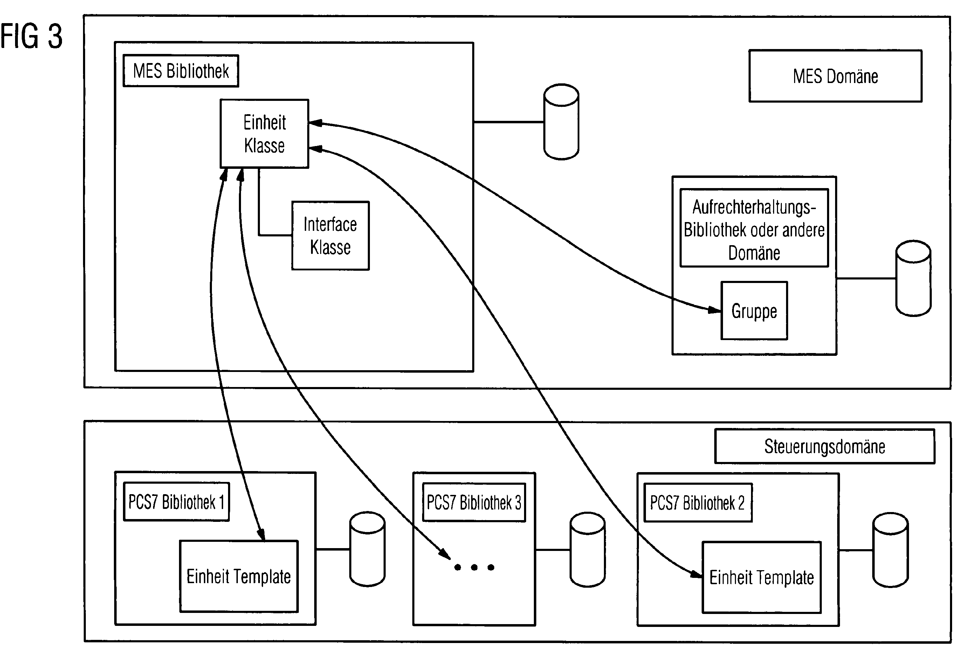

Fig 3 zeigt das Engineering ausgehend von der MES Ebene. In diesem Falle wird das Betriebsmittel-Modell im MES entsprechend einer technologischen Hierarchie (z. B. S95) erzeugt, und die Betriebsmittel-Instanzen, aus denen sich das Anlagen-Modell zusammensetzt, werden von relevanten Klassen aus instantiiert, die in den MES-Engineering-Bibliotheken gespeichert sind.

Die Betriebsmittelklassen in der MES-Bibliothek können speziell für ein Projekt erzeugt werden, doch normalerweise sammelt ein SystemIntegrator seine Erfahrungen und sein Know-how in SI-internen Bibliotheken, so dass er jederzeit in der Lage ist, seine Technologie in allen eigenen Projekten für einen spezifischen Industriezweig wieder zu verwenden.

Wir nehmen daher an, dass der als "Systemintegrator" tätige Benutzer eine Lösungsbibliothek entwickelt hat, welche die MES- und die Control-Funktionalität umfasst, die das Kernstück seines industriellen Know-hows darstellt.

In den Betriebsmittelklassen des MES, welche Control-basierte Funktionalität aufrufen, definiert der Benutzer dann:
- von welchem Typ (oder besser Template) von Control-Objekten erwartet wird, dass er in einer programmierbaren Verknüpfungssteuerung während der Ausführung läuft (und die erwartete Funktionalität zur Verfügung stellt)
- die logische Schnittstelle für die Aktivierung der Steuerungsfunktionen

In der Control-Bibliothek muss der Benutzer die entsprechenden Templates von Control-Objekten definieren/definiert haben - mit allen erforderlichen Details, einschließlich z. B. auch HMI-Templates.

Die Verknüpfung eines Control-Objekt-Templates mit der MES-Klasse hat das Ziel, den Benutzer mit der automatischen Definition der Control-Objekte in einer technologischen Hierarchie zu unterstützen.

Als Ergebnis eines integrierten Modellierungsprozesses erwartet der Benutzer, dass für jedes Betriebsmittel-Objekt im MES-Modell das entsprechende technologische Objekt im Control-System existiert, welches die erwartete Funktionalität zur Verfügung stellt.

Das Aufrufen einer Funktion, die auf der programmierbaren Verknüpfungssteuerung läuft, erfordert bestimmte logische Schritte, die normalerweise von der Funktion selbst abhängen. Wenn zum Beispiel ein bestimmtes Produkt eine Änderung von Sollwerten in der Steuerungsausrüstung erfordert und wenn eine logische Folge von Aktionen ausgeführt werden muss, um den Prozess auf die neuen Sollwerte einzustellen, muss vom MES eine Logik der programmierbaren Verknüpfungssteuerung gestartet werden, bevor die neue Produktion beginnen kann. Normalerweise erfordert dies eine Reihe von Aktionen, die vom MES durchzuführen sind, wie etwa: Schreiben bestimmter Parameter auf eine spezifische SFC, Setzen eines Eingangs der SFC, um eine bestimmte Logik zu aktivieren, Warten auf das Erreichen einer Endbedingung, Lesen gewisser Rückmeldungen und schließlich Beenden der Aktion.

In der MES-Bibliothek werden daher spezielle Klassen (Schnittstellenklassen) verfügbar sein, welche dann die erforderlichen Informationen zur Verfügung stellen, um einen Methodenaufruf innerhalb des MES in die notwendigen Aktionen zu transformieren, die erforderlich sind, um eine Funktionalität zu aktivieren, die in ein CFC/SFC-Modul im Control-System eingebettet ist. Die jeweiligen Schnittstellenklassen werden mit den Aufrufen von einem MES-Objekt für die Funktionalität verknüpft, die in den entsprechenden (im Falle einer technologischen Control-Hierarchie) Objekten des Control-Systems implementiert ist.

Die Vorgehensweise "top down" ist sowohl für Control-Systeme anwendbar, welche die Technologische Hierarchie unterstützen, als auch für Systeme, welche sie nicht unterstützen - vorausgesetzt, dass die entsprechenden Control-Objekte betrachtet werden.

Es gibt daher zwei mögliche Integrationsebenen zwischen MES und Control-Systemen:
- Das Modell innerhalb des MES spezifiziert die Funktionen, von denen erwartet wird, dass sie durch das Control-System zur Verfügung gestellt werden (Schnittstellenklasse), und die Referenz auf das Template der Control-Objekte, das die Funktionen zur Verfügung stellen wird (vollständige Definition der Control-Objekte in der MES-Bibliothek - TH verfügbar).
- Das Modell innerhalb des MES spezifiziert nur die Funktionen, von denen erwartet wird, dass sie durch das Control-System zur Verfügung gestellt werden. Nur Schnittstellenklassen für eine partielle Definition von Control-Objekten werden definiert. TH nicht verfügbar.

### MES-Seite:

Der Entwickler generiert das MES-Anlagenmodell, indem er die Objekte ausgehend von den verfügbaren Klassen in der MES-Bibliothek instantiiert. Die MES-Objekte enthalten "Template"-Informationen zu den relevanten Control-Objekten, die noch nicht erzeugt wurden.

### Zwischenphase (Erzeugen von Informationen für das Control-System) :

Auf Anforderung (und bei Vorhandensein und Verbindung der beiden Engineering-Systeme) extrahiert das MES Engineering-System relevante Informationen aus dem MES-Modell und leitet das Control-Anlagenmodell in einem temporären Zwischenformat ab. Dieses Zwischenformat enthält alle Control-Objekte, so wie sie in den Templates beschrieben sind, die in den MESinstantiierten Objekten enthalten sind.

### Controls-Seite:

Die Control-Objekte erfordern in diesem Stadium die Hinzufügung (normalerweise durch den Controls-Entwickler) von Informationen, und zwar mindestens:
- darüber, in welchem Projekt die Control-Objekte erzeugt werden sollen (die MES-Hierarchie kann auf mehr als 1 Control-Projekt verteilt werden),
- darüber, welcher programmierbaren Verknüpfungssteuerung die Objekte zugewiesen werden sollen (innerhalb eines Projekts),
- weitere Informationen, welche die spezifischen Implementierungsanforderungen des Control-Systems betreffen.

Nachdem die benötigten Informationen definiert sind, kann der abschließende Schritt der Instantiierung der Control-Objekte in den relevanten Projekten ausgeführt werden.

### MES-Seite:

Es ist ein abschließender Schritt erforderlich, um die Informationen im MES-Anlagenmodell mit den Referenzen auf die tatsächlichen Objekte fertig zu stellen, da sie im Control-System instantiiert wurden.
Anmerkung: Die Zwischenphase kann vom MES aus (Export) oder vom Control-System aus (Import) gestartet werden.

### MES-Seite:

Der Entwickler generiert das MES-Anlagenmodell, indem er die Objekte ausgehend von den verfügbaren Klassen in der MES-Bibliothek instantiiert.

### Zwischenphase:

Da sich die Informationen zur Beschreibung der Control-Funktionalität auf eine Beschreibung der im Control-System zu implementierenden Methoden beschränken, können die aus dem MES-Modell extrahierbaren Informationen nur als automatisch generierte Spezifikation der Funktionalität verwendet werden, welche aus dem zugehörigen Control-System benötigt wird.

### Controls-Seite:

Die Struktur der technologischen Hierarchie wird aus dem MES-Anlagenmodell abgeleitet (normalerweise Prozesszellen- und Einheiten-Ordner). Die Ordner der niedrigeren Ebenen und die Control-Objekte müssen vollständig entwickelt werden - und zwar so, dass sie den funktionellen Anforderungen genügen, die sich aus der MES-Funktionalität ableiten, und natürlich den funktionellen Anforderungen, die mit der Steuerung des Prozesses selbst zusammenhängen.

### MES Seite:

Es ist ein abschließender Schritt erforderlich, um die Informationen im MES-Anlagenmodell mit den Referenzen auf die tatsächlichen Objekte fertig zu stellen, da sie im Control-System instantiiert wurden.

Wenn der Benutzer dies wünscht, kann eine Konsistenzprüfung für die Betriebsmittel-Hierarchien durchgeführt werden, welche aus einem System für das jeweils andere abgeleitet wurden. Bei der Systemprüfung werden alle Objekte bzw. Objektteile verworfen, die nicht von den Systemen gemeinsam genutzt werden, und es wird gleichzeitig geprüft, ob eine System übergreifende Objektabhängigkeit ungültig gemacht worden ist.

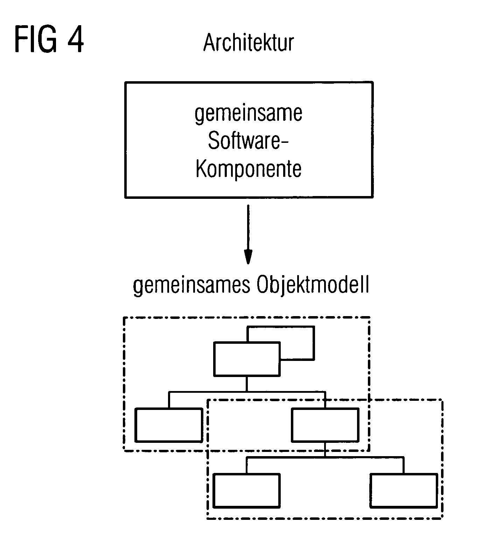

Fig 4 zeigt das Engineering der Basisarchitektur. Das zentrale Merkmal der MES-Integration mit dem Controls-Bereich ist die Möglichkeit und Einfachheit einer gemeinsamen Nutzung der Informationen zu den Anlagenressourcen, die von beiden Bereichen verwaltet werden müssen, damit eine koordinierte Durchführung des Produktionsprozesses möglich ist. Für beide Bereiche muss ein gemeinsames Objektmodell verfügbar sein. Dank eines gemeinsamen Objektmodells ist möglich, die Beschreibung der Anlagenressourcen (Modell der Betriebsmittel) in einem Bereich als direkte Informationsquelle für den jeweils anderen Bereich zu nutzen, wodurch ein doppeltes Engineering vermieden wird.

Die Projektierumgebungen müssen auf einer gemeinsamen Plattform fußen, die die erforderliche Basis-Funktionalität bereitstellt, auf die bei der Entwicklung produktspezifischer Tools und Funktionen zurückgegriffen werden kann, um:
- die benötigten Hierarchien der benötigten Typen zu erzeugen/zu verwalten,
- die Beziehungen zwischen Objekten in unterschiedlichen Hierarchien zu erzeugen/zu verwalten,
- die Hierarchiestruktur und die Objekt-Informationen mit anderen Systemen gemeinsam zu nutzen.

Um von verschiedenen Systemen stammende Anforderungen zu erfüllen, muss die Komponente über folgende grundlegende Merkmale verfügen:
- Unterstützung von Mehrfachbeziehungen zwischen Objekten in unterschiedlichen Bereichshierarchien (d. h. ein Objekt in einem System kann mit mehreren Objekten in einem anderen im Zusammenhang stehen),
- Gemeinsam genutzte Objekte können über Repositories verteilt sein und einander referenzieren.

Eine Unterstützung für die Konsistenz zwischen referenzierten Objekten sowohl zum Zeitpunkt der Objekterstellung (z. B. Importieren von Objekten aus einem Repository in ein anderes) als auch während des gesamten nachfolgenden Engineering-Prozesses muss sichergestellt werden.

Anlagen, die in Projekten mit Hilfe von Engineering-Tools des MES und des Control-Systems modelliert werden, müssen daher auf einem gemeinsamen Anlagen-Objektmodell (Common Plant Object Model) basieren. Die größten Vorteile erhält man, wenn die mit den Anlagen-Objekten verknüpfte Semantik dieselbe ist (z.B. S95 - S88); in diesem Falle können Objekte auf effiziente Weise gemeinsam genutzt werden. Falls die Semantik der Objekte nicht übereinstimmt, ist nur eine suboptimale Integration möglich.

Die Produktengineering-Tools sollen die Möglichkeit bieten, Objekte und/oder ihre Attribute, Ereignisse, Methoden mit Engineering-Attributen zu markieren, damit der Entwickler vorab definieren kann, welche Objekte/Fähigkeiten er für die gemeinsame Nutzung mit anderen Systemen/Bereichen "öffentlich" machen möchte. Zum Beispiel ist die Wahl von MES-relevanten Control-Objekten und Funktionen komfortabler, wenn sie auf eine Teilmenge aller verfügbaren Control-Objekte eingeschränkt wird. Das "Markieren" der Control-Objekte sollte sowohl auf Instanz- als auch auf Template-Ebene möglich sein.

Wie oben beschrieben, bietet das gemeinsame Anlagen-Modell (Common Plant Model) die Möglichkeit, für jedes Produkt das entsprechende Engineering-Tool zu entwickeln, um Hierarchien von Objekten mit produktspezifischer Semantik aufzubauen. Jeder Bereich/jedes Produkt kann die gewünschte Semantik entsprechend seiner spezifischen Strategie implementieren: Zum Beispiel können S95, S88 oder freie technologische Objekt-Hierarchien definiert werden.

Grundlegende Merkmale der Architektur des Common Plant Models:
- Die Engineering-Tätigkeit an den in jedem Repository enthaltenen Objekten ist von der Verfügbarkeit anderen Repositories unabhängig.
- Die Entwurfstätigkeit bei einem Projekt kann auf Subunternehmer verteilt sein. In diesem Falle ist jeder Subunternehmer in der Lage, seinen Teil des Projekts unabhängig von anderen Subunternehmern zu entwickeln, indem er z. B. Import-/Export-Techniken zur Handhabung gemeinsamer Betriebsmittelobjekte verwendet. Die Technik, die zur Verwaltung von (bereichsübergreifend) gemeinsam genutzten Objekten angewendet wird, kommt in diesem Falle zum Einsatz, um Referenzen zwischen Objekten zu verwalten, die von Subunternehmern gemeinsam genutzt werden.
- Jeder Bereich/jedes Produkt kann seine eigene(n) Hierarchie(n) implementieren, um Betriebsmittelobjekte zu organisieren.
- Es ist möglich, gemeinsame Modellierung-Tools für verschiedene Produkte zu entwickeln, wenn dies eine gemeinsame Produktstrategie widerspiegelt.

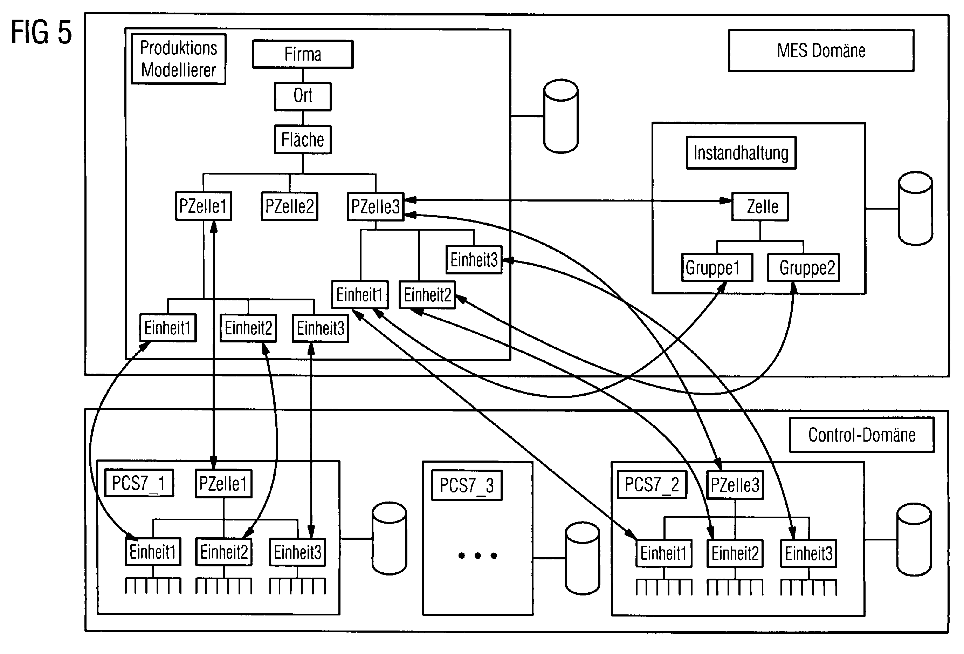

Fig 5 zeigt einen domänenorientierten Ansatz. Die Architektur des Common Plant Models, die von einer gemeinsamen Plattform-Komponente unterstützt wird, ist so beschaffen, dass sie im Hinblick auf die Strategie der Produktimplementierung neutral ist.

Jedes Produkt (und seine Bestandteile) oder jede Produktfamilie (d. h. eine Menge von Produkten, die einen spezifischen funktionellen Bereich der Industrie zum Ziel haben) erzeugt und verwaltet die Objekte, die mit ihrer Funktionalität verknüpft sind. Für die Integration von MES- und Control-Bereich bedeutet dies, dass Objekte, die vollständig einer Produktfamilie gehören (das heißt, zu demselben Bereich angehören), in den jeweiligen Repositories des Bereiches resident sind. Objekte, welche gemeinsame Anlagenressourcen repräsentieren (d. h. Betriebsmittel, welche in beiden Bereichen relevant sind), werden über die Bereichsgrenzen bzw. Domänen hinweg gemeinsam genutzt und müssen zwischen den MES- und Control-Repositories aufgeteilt werden.

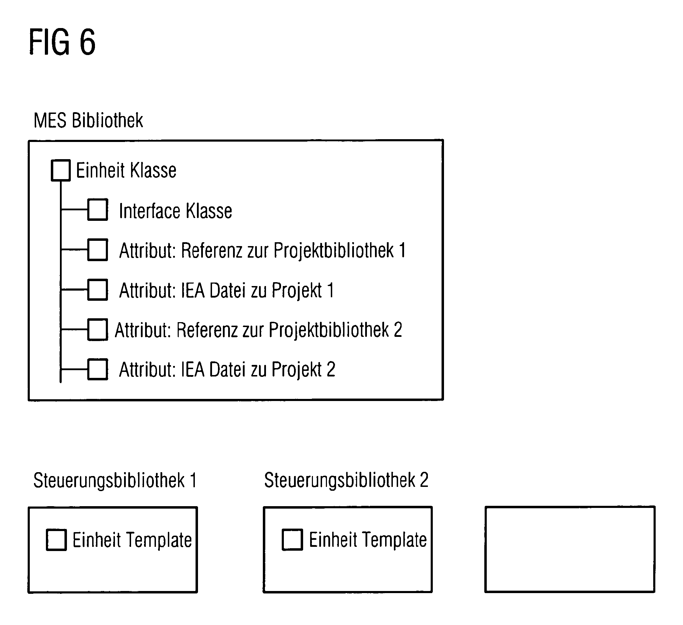

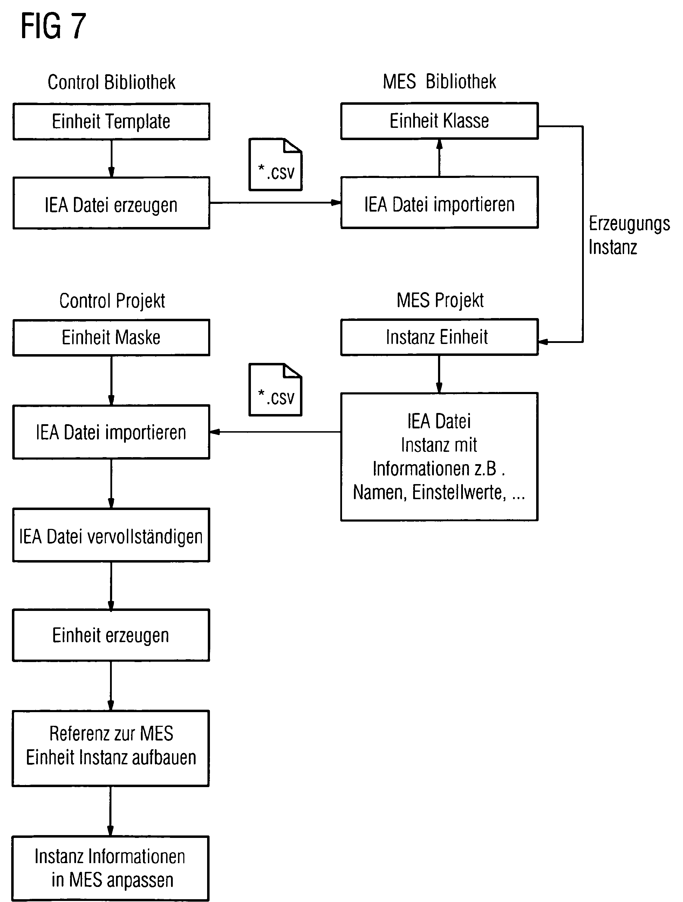

Figs 6 und 7 zeigen ein Lösungs-Bibliothekskonzept zur Unterstützung des "top down" Engineering. Wie für den Anwendungsfall "von oben nach unten" beschrieben wurde, ist es erforderlich, dass ein innerhalb der MES-Umgebung generiertes Anlagenmodell verwendet werden kann, um die Generierung des Anlagenmodells (technologische Hierarchie) auf der Seite des Control-Systems und aller zugehörigen Control-Objekte und Funktionalität zu automatisieren.

Die Vorgehensweise "von oben nach unten" ist nur möglich, wenn die MES-Objekte (und somit die entsprechenden Klassen in der MES-Bibliothek) ausreichende Informationen zur Verfügung stellen, um die Erzeugung der entsprechenden Control-Objekte zu steuern.
- Die Control-Objekte, die in diesem Anwendungsfall das automatisierten Engineering verwaltet werden, müssen in der Projekt-Control-Bibliothek mittels eines Templates beschrieben werden.
- Die MES-Objekte werden durch Instantiierung aus den entsprechenden MES-Klassen erzeugt, die in der MES-Bibliothek enthalten sind.

Um ein Engineering "von oben nach unten" zu unterstützen, müssen die Klassen von MES-Objekten, welche Funktionalität mit den Control-Objekten gemeinsam nutzen, Informationen darüber enthalten,
- wie Control-Funktionen aufgerufen werden (Schnittstellenklassen);
- welcher Typ von Control-Objekt mit ihnen verknüpft ist (Template von Control-Objekt), und in welcher Bibliothek das Template verfügbar ist.

Während die Schnittstellenklassen mittels der Engineering-Tools des MES erzeugt werden, müssen die Template-Informationen aus dem Engineering-System von Controls extrahiert werden; es wird ein Import-Tool benötigt.

Ein vom Control-System bereitgestelltes Tool "Import/Export-Assistent" (IEA) wird eingesetzt, um Template-Informationen, die ein Control-Objekt in einem Standardformat (z. B. CSV) beschreiben, in die MES-Umgebung zu exportieren und die Template-Daten mit einer Klasse der MES-Bibliothek zu verknüpfen, welche sich auf die von dem Control-System zur Verfügung gestellte Funktionalität bezieht.

Die Beschreibung des IEA Control-Templates wird in den Klassendaten der zugehörigen Entity des MES gespeichert.

Das MES-Anlagenmodell wird im Engineering-System des MES hergestellt, indem die erforderlichen Instanzen erzeugt werden. Jede Instanz, die sich auf Funktionalität des Control-Systems bezieht, stellt die Template-Beschreibung des entsprechenden Control-Objekts (zuvor in die Klassendefinition importiert) und die Beschreibung der Schnittstelle zu den Funktionen des Control-Objekts zur Verfügung.

Am Ende dieses Engineering-Prozesses hat dann das MES-Modell die S95 Anlagen-Hierarchie definiert, welche auch das Control-System benötigt, um in der technologischen Hierarchie zu modellieren, und sämtliche Template-Informationen, die erforderlich sind, um eine automatisierte Prozedur zur Erzeugung der Control-Objekte einzuleiten.

Zu diesem Zeitpunkt extrahiert das Engineering-Tool des MES die Template-Beschreibungen aus dem MES-Anlagenmodell und erzeugt eine Datei für das Tool IEA, zusammen mit den Details des MES zu den exportierten Objekten (z. B. Name des Betriebsmittels).

Auf der Control-Seite vervollständigt der Control-Entwickler die exportierten Templates mit den Informationen, die für die eigentliche Erzeugung von Control-Objekten benötigt werden, und danach kann die Instantiierung der Control-Objekte mit Hilfe des Tools IEA gestartet werden.

Nachdem die Control-Objekte erzeugt worden sind, wird ein abschließender Schritt ausgeführt, um an das MES die Daten zurückzumelden, die benötigt werden, um die tatsächlichen Referenzen zwischen den Objekten herzustellen.

Vom MES-Entwickler werden die Informationen, welche die Schnittstelle zu den Control-Objekten beschreiben, verwendet, um während der Ausführungszeit eine Gruppe von Objekten zu erzeugen, die dem MES-Bereich die Funktionen und Daten des Control-Systems (Attribute, Ereignisse) zur Verfügung stellen. Falls keine Template-Informationen verfügbar sind, müssen die Control-Objekte so entwickelt werden, dass sie die vom MES-Modell benötigten Funktionen unterstützen.

## Patentansprüche

1. System zur integrierten Entwicklung von Projekten, insbesondere von automatisierungstechnischen Projekten, mit
• mindestens einer ersten Projektierumgebung (1) zur Erstellung einer ersten Projektierungslösung, insbesondere einer Automatisierungslösung auf der Steuerungs-Ebene,
• mindestens einer zweiten Projektierumgebung (2) zur Erstellung einer zweiten Projektierungslösung, insbesondere einer Lösung zur Koordination von Prozessen und/oder Abläufen der ersten Projektierungslösung,
• einem gemeinsamen Daten- und/oder Objektmodell für die Projektierumgebungen (1, 2) und
• Mitteln zur Kennzeichnung von in einer der beiden Projektierungslösungen verwendeten Daten und/oder Objekten zur Verwendung in mindestens der jeweils anderen Projektierungslösung.

2. System nach Anspruch 1, bei dem die Mittel zur Kennzeichnung zur Vorgabe einer Liste von Daten und/oder Objekten vorgesehen sind und wobei eine Auswahl der zu Kennzeichnenden Daten und/oder Objekte durch einen Benutzer einer der Projektierumgebungen vorgesehen ist.

3. System nach Anspruch 1 oder 2, bei dem eine Daten- und/oder Objektmodellbeschreibung auf Basis von Ereignissen, Attributen und/oder Methoden vorgesehen ist.

4. System nach einem der vorhergehenden Ansprüche, bei dem die Projektierumgebungen (1, 2) Mittel zur Bearbeitung der zur Verwendung in einer Projektierungslösung **gekennzeichnet**en Daten und/oder Objekte aufweisen.

5. System nach einem der Ansprüche 1 bis 4,
• bei dem die erste Projektierumgebung (1) zur Erstellung mindestens einer aus mindestens einem Objekt bestehenden Automatisierungseinheit (AE) vorgesehen ist,
• bei dem Speichermittel (3) zum Speichern von mindestens einer für die zweite Projektiervorrichtung (2) zur Verwendung vorgesehenen Automatisierungseinheit (AE) vorgesehen sind und
• bei dem die zweite Projektierumgebung (2) zur direkten Einbindung der durch die erste Projektierumgebung (1) erstellten Automatisierungseinheit (AE) vorgesehen ist.

6. System nach Anspruch 5, bei dem die Automatisierungseinheit (AE) zur wiederholten Einbindung in Form einer Instanz durch die zweite Projektierumgebung (2) vorgesehen ist.

7. System nach Anspruch 6, bei dem die zweite Projektierumgebung (2) zur Verwendung der Objektbeziehungen der mindestens einen Automatisierungseinheit (AE) vorgesehen ist, wobei die bestehenden Objektbeziehungen durch die zweite Projektumgebung (2) beibehalten werden und wobei die zweite Projektierumgebung (2) zum Hinzufügen von Ergänzungen zu den bestehenden Objektbeziehungen vorgesehen ist.

8. System nach einem der Ansprüche 1 bis 4,
• bei dem die erste Projektierumgebung (1) zur Erstellung mindestens einer mindestens ein Steuerungs-Objekt darstellenden Beschreibung (IEA) vorgesehen ist,
• bei dem die zweite Projektierumgebung (2) zum Import der durch die erste Projektierumgebung (1) erstellten Beschreibung (IEA) des mindestens einen Steuerungs-Objekts vorgesehen ist, wobei die zweite Projektierumgebung (2) zur Anreicherung der Beschreibung (IEA) mit Information zur Koordination von Prozessen und/oder Abläufen der ersten Projektierungslösung und zum Export der angereicherten Beschreibung (IEA*) an die erste Projektierumgebung (1) vorgesehen ist und
• bei dem die erste Projektierumgebung (1) zur Erstellung einer Automatisierungseinheit (AE) auf Basis der angereicherten Beschreibung (IEA*) vorgesehen ist.

9. System nach einem der vorhergehenden Ansprüche, bei dem die zweite Projektierumgebung (2) zur Erstellung einer MES-Lösung, insbesondere zur Ausführung von Produktionsaufträgen, vorgesehen ist.

10. Verfahren zur integrierten Entwicklung von Projekten, insbesondere von automatisierungstechnischen Projekten, bei dem
• in einer ersten Projektierumgebung (1) eine erste Projektierungslösung erstellt wird, insbesondere eine Automatisierungslösung auf der Steuerungs-Ebene,
• in mindestens einer zweiten Projektierumgebung (2) mindestens eine zweite Projektierungslösung erstellt wird, insbesondere eine Lösung zur Koordination von Prozessen und/oder Abläufen der ersten Projektierungslösung,
• für die Erstellung der Projektierungslösungen ein gemeinsames Daten- und/oder Objektmodell von den Projektierumgebungen (1, 2) verwendet wird und
• in einer der beiden Projektierungslösungen verwendeten Daten und/oder Objekte für eine Verwendung in jeweils der anderen Projektierungslösung **gekennzeichnet** werden.

11. Verfahren nach Anspruch 10, bei dem die Kennzeichnung mittels einer vorgegebenen Liste von Daten und/oder Objekten durch eine Auswahl der zu Kennzeichnenden Daten und/oder Objekte durch einen Benutzer einer der Projektierumgebungen erfolgt.

12. Verfahren nach Anspruch 10 oder 11, bei dem eine Daten- und/oder Objektmodellbeschreibung auf Basis von Ereignissen, Attributen und/oder Methoden erfolgt.

13. Verfahren nach einem der Ansprüche 10 bis 12, bei dem die für eine Verwendung in einer Projektierungslösung **gekennzeichnet**en Daten und/oder Objekte in einer Projektierumgebung (1, 2) bearbeitet werden.

14. Verfahren nach einem der Ansprüche 10 bis 13,
• bei dem die erste Projektierumgebung (1) eine aus mindestens einem Objekt bestehende Automatisierungseinheit (AE) erstellt,
• bei dem mindesten eine für die zweite Projektiervorrichtung (2) zur Verwendung vorgesehenen Automatisierungseinheit (AE) gespeichert wird und
• bei dem die durch die erste Projektierumgebung (1) erstellte Automatisierungseinheit (AE) durch die zweite Projektierumgebung (2) direkt eingebunden wird.

15. Verfahren nach Anspruch 14, bei dem die Automatisierungseinheit (AE) wiederholt in Form einer Instanz durch die zweite Projektierumgebung (2) eingebunden wird.

16. Verfahren nach Anspruch 15, bei dem die Objektbeziehungen der mindestens einen Automatisierungseinheit (AE) durch die zweite Projektierumgebung (2) verwendet werden, wobei die Objektbeziehungen durch die zweite Projektumgebung (2) beibehalten werden und wobei die zweite Projektierumgebung (2) Ergänzungen zu den bestehenden Objektbeziehungen hinzufügt.

17. Verfahren nach einem der Ansprüche 10 bis 13,
• bei dem mindesten eine mindestens ein Steuerungs-Objekt darstellenden Beschreibung (IEA) durch die erste Projektierumgebung (1) erstellt wird,
• bei dem die durch die erste Projektierumgebung (1) erstellte Beschreibung (IEA) des mindestens einen Steuerungs-Objekts durch die zweite Projektierumgebung (2) importiert wird, wobei die zweite Projektierumgebung (2) die Beschreibung (IEA) mit Information zur Koordination von Prozessen und/oder Abläufen der ersten Projektierungslösung anreichert und die angereicherte Beschreibung (IEA*) an die erste Projektierumgebung (1) exportiert und
• bei dem eine Automatisierungseinheit (AE) auf Basis der angereicherten Beschreibung (IEA*) durch die erste Projektierumgebung (1) erstellt wird.

18. Verfahren nach einem der Ansprüche 10 bis 17, bei dem mittels der zweiten Projektierumgebung (2) eine MES-Lösung, insbesondere zur Ausführung von Produktionsaufträgen, erstellt wird
